# EUROPÄISCHE PATENTSCHRIFT

(11) **EP 3 473 943 B1**
(45) Veröffentlichungstag und Bekanntmachung des Hinweises auf die Patenterteilung: **02.06.2021**
(21) Anmeldenummer: 18200347.5
(22) Anmeldetag: 15.10.2018
(51) Int. Cl.: F24F 5/00, F24D 3/16, F24D 5/10

(54) **VERFAHREN UND VORRICHTUNG ZUR KLIMATISIERUNG VON RÄUMEN ÜBER THERMISCH AKTIVIERTE BETONELEMENTE**
METHOD AND DEVICE FOR AIR CONDITIONING ROOMS THROUGH THERMALLY ACTIVATED CONCRETE ELEMENTS
PROCÉDÉ ET DISPOSITIF DE CLIMATISATION DE PIÈCES À L'AIDE DES ÉLÉMENTS EN BÉTON À ACTIVITÉ THERMIQUE

(30) Priorität: 19.10.2017 DE 102017124401
(43) Veröffentlichungstag der Anmeldung: 24.04.2019
(73) Patentinhaber: Friedrich, Thomas, 54470 Bernkastel-Kues (DE)
(72) Erfinder: Friedrich, Thomas, 54470 Bernkastel-Kues (DE)
(74) Vertreter: Riebling, Peter

(56) Entgegenhaltungen:
- EP-A1- 3 045 825
- WO-A1-2011/080338
- WO-A2-2011/018088
- DE-A1-102013 200 587

## Beschreibung

Die Erfindung betrifft ein Verfahren und eine Vorrichtung zur Klimatisierung von Räumen über thermisch aktivierte Betonelemente nach dem Oberbegriff des Patentanspruches 1.

Ein solches thermisch aktivierbares Betonelement ist beispielsweise in der auf den gleichen Anmelder zurückgehenden DE 10 2009 005 577 A1 beschrieben.

Auf die dortige Beschreibung wird im Hinblick auf die Erläuterung der vorliegenden Erfindung Bezug genommen.

Kennzeichnend für die dort beschriebene thermoaktive Fertigteilplatte ist, dass im Bereich einer Klimadecke von Kühlmedium oder Wärmemedium durchströmte Rohre vorhanden sind, die in der Lage sind, eine bestimmte Wärmeenergie durch Wärmeleitung in den umgebenden Beton der Decke in den Raum abzugeben.

Der Einfachheit wegen wird in der folgenden Beschreibung lediglich von der Kühlfunktion einer solchen thermoaktivierbaren Betonplatte und einer dazugehörenden Klimadecke ausgegangen, obwohl sich die Erfindung in analoger Weise auch auf eine Heizdecke und auf eine Heizung von Räumen bezieht.

Es wird deshalb lediglich der einfacheren Beschreibung wegen von einem Kühlmedium gesprochen, obwohl auch ein Heizmedium für die thermisch aktivierbaren Betonelemente verwendet werden kann.

Nachteil der in der genannten Druckschrift beschriebenen klimatisierbaren Betonelemente ist die relative Trägheit bei der Energieabgabe in den zu klimatisierenden Raum.

Es ist bekannt, dass bei einer Temperaturänderung im Wärmeträgermedium, z.B. im Kühlwasser, von beispielsweise 5°C eine Auswirkung auf das Raumklima erst Stunden später feststellbar ist.

Die DE 10 2013 200 587 A1 offenbart eine Vorrichtung zur Klimatisierung von Räumen über eine Klimadecke, welche thermisch aktivierbare Betonelemente aufweist, wobei parallel zur Klimadecke ein Pufferspeicher angeordnet ist, der als Latentwärmespeicher ausgebildet ist. Nachteilig daran ist, dass Material des Latentwärmespeichers als große Masse vorliegt, welche sich nur schwer vollständig aktivieren lässt.

Der Erfindung liegt deshalb die Aufgabe zugrunde ein Verfahren und eine Vorrichtung für die Klimatisierung von Betonelementen der eingangs genannten Art so weiterzubilden, dass eine wesentlich schnellere Wärme- oder Kälteübertragung vom klimatisierbaren Betonelement in den zu klimatisierenden Raum gegeben ist.

Zur Lösung der gestellten Aufgabe ist die Erfindung durch die technische Lehre des Anspruches 1 gekennzeichnet.

Merkmal der Erfindung ist, dass der Klimadecke mit den dort eingebauten klimatisierten Betonelementen ein Pufferspeicher zugeordnet ist, der als Latentwärmespeicher arbeitet, der als zusätzliche Klimatisierung für den zu klimatisierenden Raum die Abluft aus dem Raum abzieht, in geeigneter Weise abkühlt oder aufheizt und wieder als forcierten Luftstrom in den Raum einleitet.

Solche Latentwärmespeicher haben hohe Schmelz-, Lösungs- oder Verdampfungsenthalpien. Sie sollten zudem auch eine große spezifische Wärmekapazität besitzen, da auch die sensible Wärme zur Speicherung verwendet wird. Es werden drei Typen von PCM unterschieden: die eutektischen Wasser-Salzlösungen, organische PCM's und die Salzhydrate zu denen auch das Natriumacetat gehört.

Latentwärmespeicher funktionieren durch die Ausnutzung der Enthalpie thermodynamischer Zustandsänderungen eines Speichermediums. Das dabei am häufigsten genutzte Prinzip ist die Ausnutzung des Phasenübergangs festflüssig und umgekehrt (Erstarren-Schmelzen).

Beim Aufladen des Inhalts kommerzieller Latentwärmespeicher werden meist spezielle Salze oder Paraffine als Speichermedium geschmolzen, die dabei sehr viel Wärmeenergie (Schmelzwärme) aufnehmen, wie z. B. Dikaliumhydrogenphosphat-Hexahydrat. Das Entladen findet als Erstarren statt, wobei das Speichermedium die zuvor aufgenommene große Wärmemenge als Erstarrungswärme wieder an die Umgebung abgibt.

Für technische Anwendungen als Latentwärmespeicher ist eine Unterkühlung der Schmelze in der Regel unerwünscht. Daher müssen dem Material geeignete Keimbildner zugesetzt werden, die eine Kristallisation kurz unterhalb der Schmelztemperatur bewirken.

Einem ähnlichen Prinzip folgt die Ausnutzung der Enthalpie reversibler chemischer Reaktionen, so zum Beispiel von auf Chemisorption beruhenden Absorptions- und Desorptionsprozessen. Das geschieht in sogenannten thermochemischen Wärmespeichern, die eine noch höhere Energiedichte ermöglichen.

Moderne Latentwärmespeichermaterialien auf Salz- oder Paraffinbasis haben für verschiedene Anwendungen entwickelte physikalische Eigenschaften und sind für nahezu alle Temperaturbereiche erhältlich.

Alle genannten Materialien werden zur Ausführung der Erfindungsidee verwendet.

Die Vorteile und Merkmale der Erfindung sind nachfolgend aufgeführt:
- PCM als große Masse lässt sich nur schwer vollständig aktivieren.
- Das aktivierende Element (Luft, oder Wasser) welches in geführten Leitungen oder Kanälen geführt wird, aktiviert das PCM zuerst in einer nächsten Umgebung (schichtweise entlang der zuführenden Energieleitung).
- Das führt dazu, dass u.U. das aktivierte Material als Dämmschicht gegenüber dem weiter entfernten Material wirksam ist, weshalb eine gleichmäßige Aktivierung über die Zeit nicht gelingt. Das liegt u.a. auch an dem geringen Temperaturunterschied zwischen dem aktivierten und nicht aktivierten Material, da dieser Bereich exakt in innerhalb der Schalttemperatur des PCM-Materials liegt
- Deshalb hat man auch bislang versucht, das PCM in dünnen Schichten zu applizieren, um die zu aktivierende Schicht in der Tiefe möglichst gering zu halten.
- Dabei betrifft eine Anwendung die Verwendung von PCM in Form einer Mikroverkapselung. Kleine Einheiten lassen sich in einem Trägermaterial schichtweise aufgetragen, um die Tiefe der "PCM-Schicht" zu begrenzen. Dabei handelt es sich z.B. um dünne Putze, oder dünnwandige Platten.
- Dabei kann die Luft entlang der großen Oberfläche vorbei streichen und somit den Austausch der Energie aus und in das PCM-Material zu bewerkstelligen, allerdings nur in begrenztem Umfang
- Eine weitere Ausführung besteht darin, dünne plattenförmigen Elemente mit geringer Stärke mit einer Schicht von PCM zu füllen, so dass auch hier die Möglichkeit besteht, entlang der großen Oberfläche die Luft vorbei strömen zu lassen und dann die Energie umzuwandeln
- Die dünnen Platten lassen sich auch senkrecht oder waagerecht unterhalb einer Decke anordnen, um dann den Luftstrom im Raum für die Be- und Entladung des PCM's zu nutzen.
- Weitere Ansätze nutzen die so genannten Makroverkapselungen von PCM. Behälter oder Gefäße in überschaubarer Größe mit einer scheibenförmigen (im Gegensatz zu einer Kugel) Ausbildung, analog dem vor genannten dünnen Platten nehmen eine begrenzte Menge an PCM auf. Diese Elemente werden dann in einer Trägerflüssigkeit (z.B. Wasser innerhalb eines Tanks) gelagert, um dann über den Austausch zwischen PCM-Behälter und Transportflüssigkeit die Energie auszutauschen.
- Die genannten Techniken nutzen mehrheitlich die Luft als Energietransportmittel und das PCM bleibt in überschaubaren Einheiten (mikro- bis Makroverkapselung) zugänglich. Die genannte Makroverkapselung erfolgt nur über den Energietransport mit Wasser
- Über großformatige mit PCM gefüllte Behälter ist bislang über wirksame Methoden zum Be- und Entladen nichts bekannt.
- Die Energie kann nicht über Luft oder Wasser als Energietransportmittel in das Material direkt ein- oder ausgetragen werden.
- Der neue Ansatz besteht darin, den mit PCM gefüllten Behälter mit einem dichten Netz von Rohrleitungen aus Metall zu durchziehen. Die direkte Umgebung der Rohrleitungen ist zudem mit einem dichten Paket von Lamellen aus Metall umgeben, so dass das einem Rohrleitungsabschnitt zugeordnete Volumen des PCM-Materials direkt über die Wärmeleitung in dem Metall angesprochen wird.
- Ein dichtes Netz an Rohrleitungen mit aufgesetzten Lamellen (Schottblech) entspricht einem wirkungsvollen Wärmetauscher und ist bekannt als Kühlereinheit in Kraftfahrzeugen. Es wird demnach ein Latentwärmespeicher mit einem im Speichermaterial eingebetteten Wärmetauscher bevorzugt, der wie ein Kühlwasser-Wärmetauscher in einem Kraftfahrzeug aufgebaut ist. Die feinen Lamellen des Kühlers sind im PCM-Material eingebettet und erzeugen einen optimalen Wärmeübergang durch die sich ergebenden dünnen Schichten des PCM-Materials.
- In den Rohrleitungen zirkuliert zudem das Medium Wasser, da es gegenüber der Luft größere Mengen von Energie auch bei kleinen Temperaturunterschieden transportieren kann.
- Die Umwandlung des wassergeführten Energietransports an den ev. aus Nutzersicht gewünschten Luftstrom, erfolgt ebenfalls über einen weiteren Wärmetauscher, bei dem die durchströmende Luft die Wärmeenergie an dem dichten Rohrnetz und seinen Lamellen aufnimmt.
- Der neue Ansatz zum Be- und Entladen von großen Einheiten von PCM kann mit dem Wärmeträgermedium Wasser erfolgen, das seine Wärmeenergie über ein dichtes Netz an Leitungen inklusive der aufgesetzten Lamellen (analog der Bauweise eines Kühlers) abgibt.
- In Verbindung mit einer Bauteilaktivierung bietet sich jetzt die Möglichkeit an, das in den zugehörigen Rohregistern (im Betonquerschnitt einbetoniert) zirkulierende Wasser direkt mit dem Wärmetauscher (Kühler) in dem PCM gefüllten Behälter kurzzuschließen. Dieser Kurzschluss garantiert eine schnelle und wirksame Be- und Entladung.
- Die mit PCM gefüllten Behälter können nun direkt in dem Deckenhohlraum eingebaut werden.
- In diesem Fall muss nicht mehr der Weg über die Luft zwischen Decke und PCM gefüllter Platte gewählt werden, um die Energie in den Raum zu bringen.
- PCM ist nunmehr ein direkt ansprechbarer und kontrollierbarer Energiespeicher, der über das Medium Wasser Be- und Entladen wird. Das Medium Luft tauscht seine Energie über einen weiteren Wärmetauscher mit dem Medium Wasser aus.

Innovationskraft der neuen Technik besteht in Folgendem:
1 es gelingt, auch große zusammenhängende Mengen von PCM ohne Mikro- und Makroverkapselung effizient anzusprechen
2 Mit dieser neuen Technik braucht es keine Verkapselung des PCM in kleinste bis mittelgroße und zudem speziell geformte Behältnisse mehr, sondern das PCM wird in jeglicher Form eines Behälters beliebiger Größe eingelagert.
3 Große aber auch kleine Behälter ermöglichen den gezielten Einsatz von PCM-Material mit unterschiedlichen Schalttemperaturen zur Optimierung der Speichermöglichkeiten.
4 Das erlaubt, PCM in Behältern als zentrale aber auch als dezentrale Einheiten auf die jeweiligen Bedürfnisse abgestimmt einzusetzen.
5 Dazu wird ein höchst feines Netz an untereinander verbundene Metallbauteile genutzt.
6 Das feine Netz bzw. Gerüst von Metallbauteilen ist an ein ebenfalls weitläufiges Rohrleitungsnetz angeschlossen
7 Der Energietransport erfolgt ausschließlich über das Medium Wasser, was einen schnellen und effizienten Ablauf ermöglicht.
8 Das PCM ist nicht mehr mit der Luft direkt verbunden, was andere Systeme bislang für die Energieübertragung nutzen.
9 Dieser Ansatz erlaubt auch die direkte Verbindung mit den wassergeführten Rohrleitungen einer Bauteilaktivierung.

Mit der gegebenen technischen Lehre ergibt sich der Vorteil, dass nun die günstigen physikalischen Eigenschaften eines Latentwärmespeichers für die Klimatisierung von Räumen in Verbindung mit einer deckenseitigen Bauteilaktivierung verwendet werden kann, ohne dass ein hochstromführender Elektroanschluss und dergleichen notwendig ist und ohne dass großvolumige, die erzeugte Wärme abführende Rohre nach draußen geführt werden müssen. Der weitere Vorteil ist, dass neben der relativ trägen Wärmeabgabe in der Klimadecke nunmehr eine schnelle Klimatisierung durch Verwendung eines luftgestützt arbeitenden Pufferspeichers gegeben ist, der als Latentwärmespeicher ausgebildet ist.

Versuche des Anmelders haben ergeben, dass ein Latentwärmespeicher einen wesentlich besseren Energiehaushalt (Energie-Management) aufweist, als beispielsweise übliche Wärmespeicher, die z.B. als Wasserspeicher oder Feststoffspeicher ausgebildet sind.

Ein solcher Latentwärmespeicher hat beispielsweise als Speichermedium ein verflüssigbares Fett, z.B. in der Art eines Paraffins, welches unter Veränderung der Raumtemperatur seinen Aggregatzustand ändert und beispielsweise von einem festen, erstarrten Zustand in einen flüssigen Zustand übergeht.

In einer bevorzugten Ausgestaltung weist der Latentwärmespeicher als Speichermedium ein im fraglichen Temperaturbereich den Aggregatzustand wechselndes Medium auf.

Es wurde festgestellt, dass als ideales Medium ein Fett oder Paraffin verwendet wird, wie es als Kochfett unter dem Markennamen "Biskin" in der Industrie und im Haushalt üblich ist.

Ein solches Kochfett hat bei Raumtemperatur eine feste Konsistenz und damit einen ersten Aggregatzustand. Bei erhöhter Raumtemperatur von z. B. 30° Celsius verflüssigt es sich langsam und geht in den Schmelzzustand über, wo ein zweiter Aggregatzustand herrscht.

Es wurde nun festgestellt, dass im Bereich zwischen den beiden Aggregatzuständen der Latentwärmespeicher trotz Zuführung einer Wärmeenergie nicht mehr seine Temperatur erhöht oder erniedrigt. Er bleibt also in seinem latenten Zustand trotz Zuführung von Energie immer in einem gleichmäßigen Aggregatzustand und es kann deshalb dem abgekühlten Latentwärmespeicher nunmehr eine relativ große Energie als Kühlenergie entzogen werden, die zur Abkühlung der aufgeheizten Raumluft dient, ohne dass sich der Aggregatzustand des Latentwärmespeichers ändert oder er sich in unzulässiger Weise aufheizt.

Somit ist über eine gewisse Zeit von z. B. 8 Stunden sichergestellt, dass die latente Energie des Wärmespeichers gleichmäßig entnommen werden kann, ohne dass sich in dieser Zwischenzeit die Temperatur des Latentwärmespeichers erhöht.

In der Erfindung ist ein solcher Latentwärmespeicher als blockförmiges oder zylinderförmiges Gehäuse ausgebildet, welches in seinem Innenraum eine Anzahl von Wärmetauschermodulen enthält, wobei jedes Wärmetauschermodul aus einander gegenüberliegenden einlauf- und auslaufseitigen Verteilerkästen besteht, die über eine Vielzahl von Einlauföffnungen durch zugeordnete Verbindungsrohre miteinander verbunden sind, so dass über die einlauf- und auslaufseitig angeordneten Verteilerkästen das Wasser als Wärmeträgermedium hindurchströmt und das im Zwischenraum zwischen den Verbindungsrohren angeordnete PCM-Material entsprechend kühlt oder erwärmt.

Zur besseren Wirksamkeit der Wärmedurchdringung des flüssigen, halbflüssigen oder erstarrten Fettmaterials werden nach der Erfindung die im Wärmetauschermodul angeordneten Verbindungsrohre noch mit zusätzlichen Konvektorblechen versehen die wärmeleitend mit einer Vielzahl dieser Verbindungsrohre verbunden sind, um so eine Wärmedurchdringung des kompletten Innenraumes des Gehäuses des Pufferspeichers zu erreichen.

Damit wird eine intensive, gleichmäßig sich über das Volumen des Pufferspeichers erfolgende Wärme- oder Kältebeeinflussung des im Zwischenraum zwischen den Konvektorblechen und den Verbindungsrohren des Wärmetauschermoduls angeordneten Materials erreicht.

Ein solcher Latentwärmespeicher hat beispielsweise Abmessungen von LxBxH (200 x 100 x 10cm) und kann in der Klimadecke unsichtbar eingebaut sein.

Es wurde festgestellt, dass der Aggregatzustand vom festen in den flüssigen Zustand dafür sorgt, dass über einen weiten Temperaturbereich eine gleichmäßige Wärmeabgabe aus diesem Latentwärmespeicher möglich ist, was mit den üblichen Wasserspeichern oder den Betonspeichern nicht möglich ist.

Es ist zwar längst in der Heiztechnik bekannt, so genannte feste Wärmespeicher zu verwenden, wie z.B. Ziegelsteinblöcke, Betonblöcke oder dergleichen; es hat sich jedoch herausgestellt, dass ein Latentwärmespeicher über einen weiten Temperaturbereich eine gleichmäßige Wärmeaufnahme- oder Abgabe erzielt, wodurch der Reglungsaufwand für die ein- und ausleitbaren Luft- und Medienströme wesentlich reduziert wird.

Dies führt dazu, dass ein solcher Latentwärmespeicher in der Art eines Pufferspeichers nunmehr in den Hohlraum eines zweischaligen Deckenaufbaus eingebaut werden kann, wie er in üblicherweise für die Klimadecken bereits schon verwendet wird und es hat sich als besonders vorteilhaft herausgestellt, wenn der Pufferspeicher als flacher, kofferartiger Behälter ausgebildet ist, der von Wasser und Luft durchflossen ist, wobei die wasserdurchströmten Rohre noch mit zusätzlichen, wärmeableitenden Konvektorblechen umgeben sind, um so eine sehr großflächige Wärmeabgabe in das feste, halbflüssige oder flüssige Fettmaterial im Innenraum des Gehäuses des Pufferspeichers abzugeben.

Selbstverständlich ist es auch möglich, die luftführenden Rohre an ihrem Außenumfang mit Konvektorblechen zu umgeben, um auch einen günstigen Wärmeübergang auf die luftführenden Rohre in der fetthaltigen Masse des PCM-Elementes zu ermöglichen.

Von besonderem Vorteil ist, dass nun eine schnelle Temperaturregelung und eine schnelle Klimatisierung möglich sind, weil der erfindungsgemäße Pufferspeicher die Klimatisierung durch die Klimadecke puffert und harmonisiert.

Wenn es beispielsweise in Hotelzimmern notwendig ist, dass der eintretende Besucher eine Wirkung der Klimaanlage verspürt, dann reicht es aus, wenn er einen Knopf betätigt, um so den Luftabzugsventilator des Pufferspeichers zu betätigen, um so einen schnellen Luftstrom in den Raum hinein zu leiten, weil er ansonsten die Wirkung einer ungepufferten Klimadecke ohnedies nicht verspürt, nachdem keinerlei Geräusche oder sonstige Anzeichen für eine Klimatisierung über die Klimadecke wahrnehmbar sind.

Gleiches gilt für die Pufferwirkung des erfindungsgemäßen Latentwärmespeichers in mit verschiedenen Wärmelasten belasteten Räumen, wo z.B. eine Sonneneinstrahlung und eine Vielzahl von Besuchern zusätzliche Wärmelasten in den Raum eintragen, die dann durch den Betrieb des erfindungsgemäßen Pufferspeichers aufgenommen werden, wonach dann die Grundlast für die Klimatisierung des Raumes durch die erfindungsgemäße Klimadecke übernommen wird.

Daraus ergibt sich, dass der erfindungsgemäße Pufferspeicher lediglich zur Abpufferung von Wärmelastspitzen in zu klimatisierenden Räumen verwendet wird, während die Grundlast von der Klimadecke übernommen wird.

Die Wirkung einer solchen Klimadecke ist ausführlich in der DE 10 2009 005 577 A1 beschrieben, sodass auf eine weitere Beschreibung dieser Klimadecke verzichtet werden kann.

In einer bevorzugten Ausgestaltung der vorliegenden Erfindung ist der erfindungsgemäße Pufferspeicher als Wasser-PCM-Materialwärmetauscher ausgebildet und das in dem Innenraum des PCM-Materials klimatisierte Wasser wird über einen weiteren Luft-Wasser-Wärmetauscher zur Klimatisierung der dort hindurchgeführten Luft verwendet.

Es sind also zwei Wärmetauscher vorhanden, wobei der größere Wärmetauscher durch das PCM-Element gebildet ist, welches beispielsweise in einer Würfelform oder in einer Röhrenform mit Abmessungen von z.B. 80cm Länge, 40cm Breite und 20cm Höhe vorhanden sein könnte und am Kopf eines solchen Latentwärmespeichers wäre dann der Luft-Wasser-Wärmetauscher vorhanden, der mit einem Ventilator arbeitet, um die Abluft oder Raumluft aus einem Raum abzusaugen und in forcierter Weise durch den Luft-Wasser-Wärmetauscher hindurch zu führen, um so die auf eine höhere Temperatur aufgeheizte Raumluft in eine niedrigere Temperatur aufweisende Kühlluft umzuwandeln.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: schematisierter Aufbau eines klimatisierten Betonelementes mit Zuschaltung eines mit PCM-Materialien arbeitenden Pufferspeichers
Figur 2: das Diagramm der Wärmespeicherkapazität über die Temperatur von Beton und einem PCM-Material
Figur 3: das Diagramm der Temperatur über die Wärmemenge von Beton und einem PCM-Material
Figur 4: schematisiert einen Schnitt durch einen zu klimatisierenden Raum mit Darstellung einer Klimadecke und Hinzuschaltung eines erfindungsgemäßen Latentwärmespeichers
Figur 5: schematisiert einen Schnitt durch einen Raum nach Figur 4 mit Darstellung einer Klimadecke und eines darunter angeordneten Klimabodens
Figur 6: vergrößerter Schnitt durch die Klimadecke nach Figur 5 in einer um 90 Grad gedrehten Darstellung
Figur 7: die Schnittdarstellung des erfindungsgemäßen Pufferspeichers
Figur 7a: schematisiert eine perspektivische Darstellung eines Wärmetauschermoduls
Figur 7b: der aus den parallel geschalteten Wärmetauschermodulen zusammengesetzte Pufferspeicher nach der Erfindung
Figur 7c: die Stirnansicht des Pufferspeichers nach Figur 7a
Figur 7d: die Draufsicht auf den Pufferspeicher nach Figur 7a
Figur 8: die Kühlleistung/ Wärmelasten bezogen auf eine Uhrzeit und auf eine bestimmte Raumtemperatur mit Hinzunahme eines PCM-Pufferspeichers und ohne Hinzunahme
Figur 9: Draufsicht auf einen klimatisierten Raum mit Darstellung einer Vielzahl von hierzu verwendeten Wärmetauschermodulen
Figur 10: Schnitt durch die Anordnung nach Figur 9

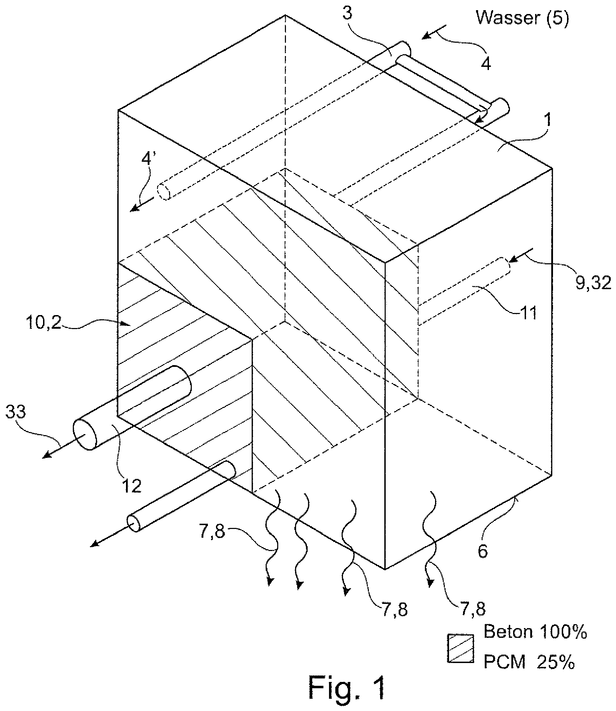

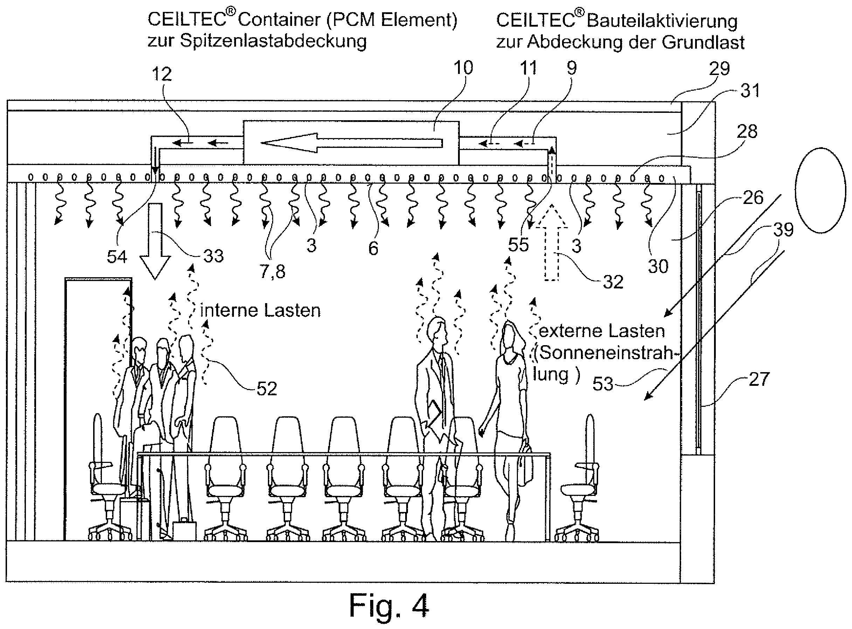

In Figur 1 ist schematisiert ein Funktionsbild dargestellt, in dem ein klimatisiertes Betonelement 1 dargestellt ist, welches eine Klimadecke 28 in einem Raum 26 symbolisiert (siehe Fig.4).

In an sich bekannter Weise wird dieses Betonelement 1 dadurch klimatisiert, dass es von einer Vielzahl von Rohrleitungen 3 durchgriffen ist, durch welche ein Wärmeträgermedium bevorzugt Wasser 5 in Pfeilrichtung 4 eingespeist wird und auf der gegenüberliegenden Seite in Pfeilrichtung 4' wieder das Betonelement 1 verlässt.

Aus der Darstellung in Figur 1 ist deutlich, dass die Klimaleistung eines solchen klimatisierten Betonelementes auch dadurch erreicht werden kann, dass ein im Volumen etwa um ein Viertel verringertes PCM-Element 2 verwendet wird, welches die gleiche Klimaleistung aufbringt.

Unter dem Begriff PCM-Element wird ein Wärmetauschermodul verstanden, welches als Wärmeträgermedium ein Phase-Changing-Material aufweist, welches gemäß der allgemeinen Beschreibung bevorzugt aus einem fettartigen Material besteht, welches bestimmte Schmelzeigenschaften unter Raumtemperatur aufweist.

Es ist symbolisiert in Figur 1 dargestellt, dass auch dieses PCM-Modul nunmehr als Pufferspeicher 10 ausgebildet ist, der als Latentwärmespeicher arbeitet und auch dieser Pufferspeicher 10 ist durch eine Vielzahl von Wasserleitungsrohren durchsetzt und führt daher zu einer Klimatisierung von Luft, die als Raumluft 32 in Pfeilrichtung 9 über eine zugeordnete Luftzuführung 11 eingeführt wird und als Kühlluft 33 die Luftabführung 12 verlässt.

Es ist ebenfalls symbolisch dargestellt, dass das gesamte klimatisierte Betonelement mit dem eingebauten Pufferspeicher 10 nunmehr eine Kühldecke 6 bildet, von deren Oberfläche ausgehend in Pfeilrichtung 7 eine gekühlte Luft 8 nach unten strömt, wobei zusätzlich die Kühlluft 33 in den Raum einströmt. Eine solche Einbausituation ist aus Figur 4 zu entnehmen.

Es ist nicht notwendig, dass die Kühlluft 33 direkt in den Raum einströmt. Es können auch Unterzugsdecken oder Zwischendecken mit Schlitzen oder Perforationen vorgesehen sein, um eine indirekte Einströmung von Kühlluft 33 in den Raum zu ermöglichen.

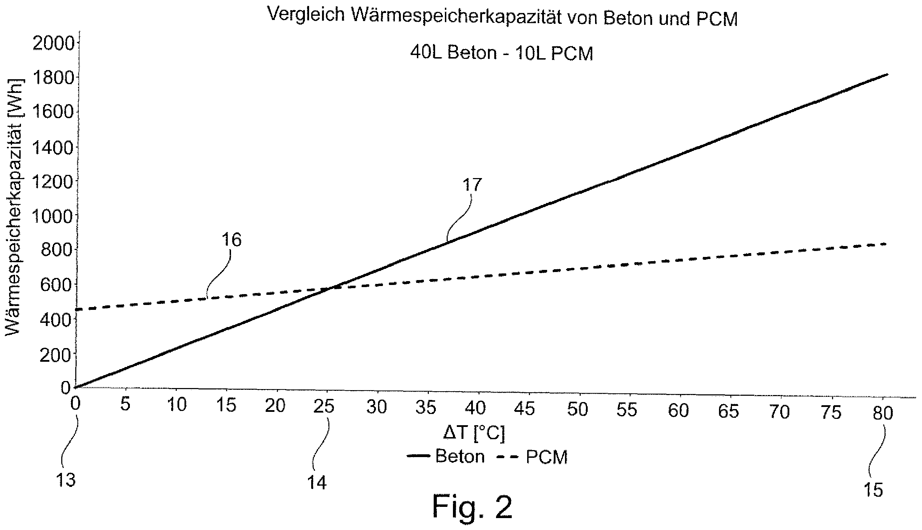

In Figur 2 sind die Vorteile bei der Verwendung von PCM-Material in Form einer Wärmeenergiespeicherkurve des PCM-Materials 16, im Vergleich zu der Wärmeenergiespeicherkurve des Betons 17 dargestellt.

Ausgehend von der Position 13 ist ein Temperaturanstieg über die Position 14 bis zur Position 15 angegeben, der einen Temperaturanstieg von 0 Grad bis 25 Grad bei Position 14 und von Position 14 ausgehend bis 80 Grad bei Position 15 betrifft.

Die Speicherkapazität, die in Wattstunden auf der Ordinate aufgetragen ist, zeigt für das Betonmaterial eine linear ansteigende Betonspeicherkurve, sodass das Wärmespeichervermögen von Beton gemäß der Wärmeenergiekurve 17 linear ansteigt, was zu großem Regelungsaufwand führt.

Im Gegensatz hierzu zeigt die Wärmeenergiekurve 16 des PCM-Materials eine lineare, annähernd gleichbleibende Wärmekapazität über den gesamten Temperaturbereich von Position 13 bis 15, was die Verwendung in einem Pufferspeicher besonders begünstigt.

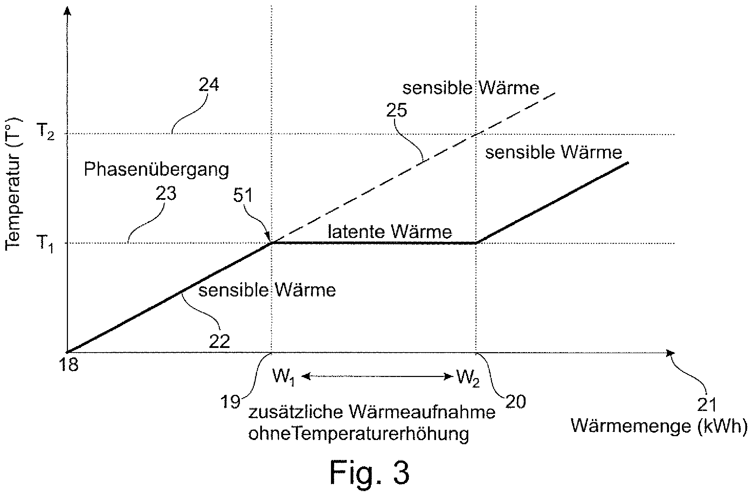

In Figur 3 ist auf der Ordinate die Temperatur zwischen zwei Temperaturen T1 und T2 aufgetragen, während auf der Abszisse die Wärmemenge in Kilowattstunden aufgetragen ist.

Im Nullpunkt, bei der Position 18, ist erkennbar, dass die Temperaturkurve 22 des PCM-Materials bis zur Position 19 linear ansteigt, was das PCM-Material für einen Latentwärmespeicher wenig geeignet erscheinen lässt.

Erst bei Position 19 führt eine zusätzliche Wärmeaufnahme zwischen den Punkten W1 und W2 nicht zu einer Temperaturerhöhung, weil die Eigenschaft des PCM-Materials eine weitere Temperaturerhöhung verhindert und erst ab der Position 20 erfolgt dann wieder eine Temperaturerhöhung aufgrund einer weiteren Zuführung von Wärme.

Daher ist ein solcher Latentwärmespeicher prädestiniert dafür, im Bereich der latenten Wärme zwischen den Positionen 19 und 20 als Pufferspeicher 10 verwendet zu werden, weil ein sehr geringer Regelungsaufwand für die zu regelnden Luft- und Wasserströme vorhanden ist.

So zeigt die Figur 4 als erfindungsgemäßes Beispiel die Kombination einer Klimadecke 28 in einem zu klimatisierenden Raum 26, der unter verschiedenen Wärmelasten steht.

Es gibt eine Sonneneinstrahlung 39 durch die vorhandenen Fenster 27 und ferner erzeugen die im Raum befindlichen Personen interne Wärmelasten, die stark variieren.

Eine Klimatisierung des Raumes allein durch eine Klimadecke 28 ist deshalb schwierig zu verwirklichen, ohne unerwünschte Temperaturspitzen im Raum zu erzeugen.

Aus diesem Grund wird der raumseitigen Klimadecke 28 der erfindungsgemäße Pufferspeicher 10 zugeschaltet, der in der Lage ist, über geeignete Abzugsöffnungen in der Decke die Raumluft 32 zu entnehmen und über Luftzuführungen 11 aufzunehmen, wodurch er aufgrund der Wasserkühlung, bevorzugt mit dem gleichen Wasser, mit dem auch die Klimadecke 28 gekühlt wird, den Luftstrom herunter kühlt und über die Luftabführung 12 wieder als Kühlluft 33 in den Raum zurückführt.

Die Verwendung des gekühlten Wassers für die Klimadecke 28 und für die Kühlung des Pufferspeichers 10 wird bevorzugt, obwohl die Erfindung hierauf nicht beschränkt ist.

Die Erfindung zeigt weiterhin, dass der Pufferspeicher 10 bevorzugt im Hohlraum 31 eines doppelschaligen Deckelaufbaus angeordnet ist, wobei die Oberschale 29 nicht mit einer Klimatisierung versehen ist, während die Unterschale 30 die Klimatisierung mit den zugeordneten Rohrleitungen 3 und das durch diese Rohrleitungen fließenden Kühlwasser trägt.

Es kann in einer anderen Ausgestaltung auch vorgesehen sein, dass auch die Oberschale 29 eine Klimatisierung trägt, insbesondere bei mehrstöckigen Bauten, bei der die Oberschale 29 gleichzeitig den Fußboden des darüber liegenden Raumes bildet.

Zur Figur 3 wird noch angefügt, dass eine latente Wärme nur im Temperaturbereich zwischen den Linien 23 und 24 im Bereich der Temperaturbereiche T1 und T2 vorhanden ist, wobei die niedrigere Temperatur T1 beispielsweise 20°C beträgt und die höhere Temperatur T2 beispielsweise 30°C sein kann. Wesentlich ist nur, dass ein Phasenübergang 51 im Kreuzungspunkt zwischen der Ordinate 23 und bei Position 19 stattfindet, sodass dann die PCM-Temperaturkurve 22 im Phasenübergang 51 den latenten Wärmebereich bildet.
Die Temperaturkurve 25 für Beton steigt hingegen linear an.

In der Figur 4 erfolgt die Klimatisierung des Raums 26 durch die zwei Komponenten der Erfindung, nämlich durch die Aktivierung der Klimadecke 28, die von einer Vielzahl von Rohrleitungen 3 durchzogen ist, in den das Wärmeträgermedium - bevorzugt Wasser - zirkuliert. Die Rohre 3 sind in dem Betonmaterial der Klimadecke 28 eingebettet und erzeugen so eine Kühlung der Klimadecke 28, die als gekühlte Luft 8 in Pfeilrichtung 7 in den Raum fällt.

Es ist nicht zeichnerisch dargestellt, dass noch zusätzliche Luftaustrittsbohrungen in der Klimadecke 28 angeordnet sein können, über welche zusätzlich Kühlluft in den Raum 26 eingeblasen werden kann. Nachdem ein solcher forcierter Kühlluftstrom meistens als unangenehm empfunden wird, soll diese Zusatzkühlung mit einem Kühlluftstrom lediglich als Kombinationsmöglichkeit zu der erfindungsgemäßen, aus zwei Komponenten bestehenden Klimadecke 28 erwähnt werden.

Es wird deutlich, dass die durch Personen im Raum 26 erzeugte Wärmelast 52 stark schwankend ist und von der Anzahl der Personen im Raum 26 abhängt, wobei deren Wärmelast 52 noch zusätzlich durch eine durch Sonneneinstrahlung durch das Fenster 27 erzeugte weitere Wärmelast 53 verstärkt wird. Es bedarf also einer schnellen Regelung der Temperatur im Raum 26 und ein schneller Ausgleich der im Raum bestehenden Wärmelasten 52,53, was durch die Anordnung der Klimadecke 28 allein nicht bewerkstelligt werden kann.

Aus diesem Grund sieht die Erfindung vor, dass lediglich zur Abdeckung der Grundlast die erfindungsgemäße Klimadecke 28 verwendet wird und zur Spitzenlastabdeckung der erfindungsgemäße Latentwärmespeicher (Pufferspeicher 10) verwendet wird.

Es wird dabei bevorzugt, wenn der Pufferspeicher 10 gemäß Figur 4 im Deckenhohlraum 31 oberhalb der Klimadecke 28 angeordnet ist. Dies hat den Vorteil, dass er verdeckt eingebaut ist und im Übrigen noch mindestens mit seiner Unterseite einen wärmeleitenden Kontakt zu der kühlen Klimadecke 28 aufweist, wodurch die Wärmebilanz des Pufferspeichers 10 verbessert wird. Es wird also mindestens an seiner Bodenseite durch die niedrigere Temperatur der Klimadecke 28 gekühlt.

Die in Figur 4 dargestellte Luftansaugung 55 kann über geeignete Gitter oder Perforationen in der Klimadecke 28 erfolgen und die in den Raum 26 erfolgende Lufteinblasung 54 kann ebenfalls über geeignete Gitter, Verteiler oder eine Unterzugsdecke erfolgen.

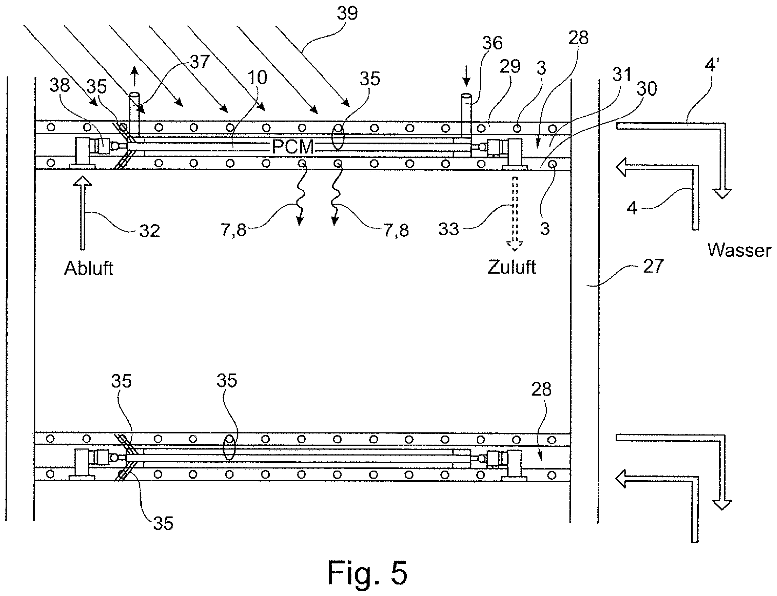

Die Figur 5 zeigt einen schematisierten Schnitt durch einen Raum nach Figur 4, wobei auch der Fußboden klimatisiert ist, weil dieser doppelschalig ausgebildet ist und die Decke eines darunterliegenden Raumes bildet.

Es ist dargestellt, dass die zu klimatisierende Raumluft 32 in den Hohlraum 31 zwischen der Oberschale 29 und der Unterschale 30 eingezogen wird und hierfür bevorzugt ein Ventilator 38 vorhanden ist, der elektrisch regelbar ist und der beispielsweise von den Wärmelasten 53, 54 im Raum und von anderen in den Raum eingetragenen Wärmelasten regelbar ist.

Ferner ist durch die eingezeichneten Beipässe 35 angegeben, dass das in den Rohrleitungen zur Klimatisierung der Klimadecke 28 strömende Wasser, welches in die Pfeilrichtungen 4, 4' ein- und ausläuft, auch zur Energieversorgung des Pufferspeichers 10 verwendet wird.

Alternativ und - völlig unabhängig von der wassergekühlten Versorgung des Pufferspeichers 10 - ist angegeben, dass statt einer Wasserkühlung auch eine Luftkühlung für den Pufferspeicher 10 vorgesehen sein könnte. Hier ist als Beispiel angegeben, dass eine derartige Luftkühlung durch eine kühlere außenluftführende Luftleitung 36 stattfinden kann, die den Pufferspeicher 10 durchsetzt und das dort befindliche PCM-Material 2 auf eine niedrigere Temperatur bringt, sodass der Pufferspeicher 10 seine Kühlenergie für einen langen Zeitraum von beispielsweise 8 Stunden kontinuierlich abgeben kann, ohne eine Temperaturerhöhung zu erfahren.

Die Luftableitung erfolgt über die Luftleitung 37 auf dem gegenüberliegenden Ende.

Wichtig ist demnach, dass der latente Wärmespeicher entweder Wasser- oder Luft gekühlt ist (oder in analoger Weise wassergeheizt oder luftgeheizt ist) und er in der Lage ist, die aufgenommene Wärmemenge in konstanter Form über einen langen Zeitraum von beispielsweise 8 Stunden wieder abzugeben.

Die durch den Ventilator 38 angesaugte Raumluft 32 wird demnach nach gleichmäßiger Abkühlung im Pufferspeicher 10 als Kühlluft 33 in den Raum über die Lufteinblasung 54 abgegeben.

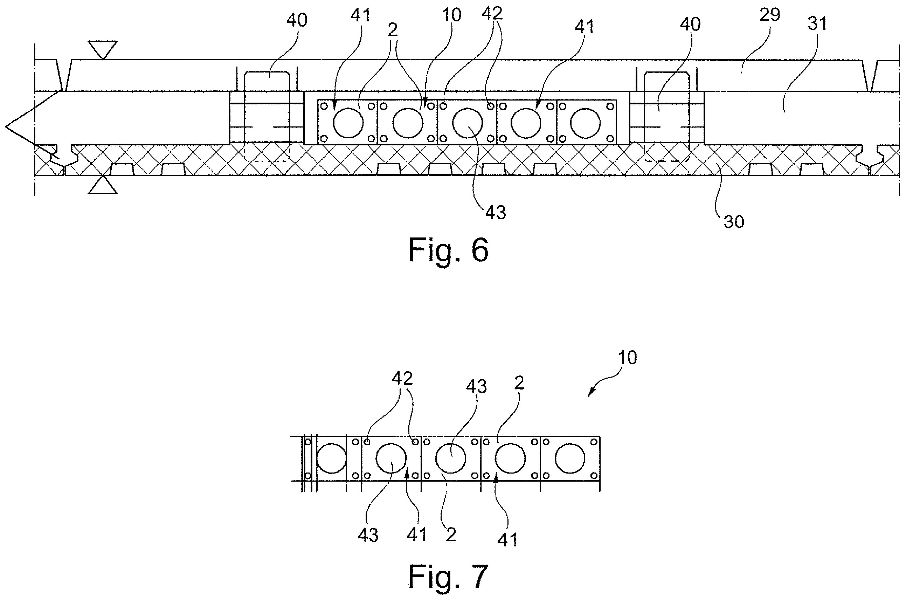

Die Figur 6 zeigt einen um 90 Grad gedrehten Querschnitt durch den Schnitt in Figur 5, wo erkennbar ist, dass eine Vielzahl von Wärmetauschermodulen 41, die jeweils als Pufferspeicher 10 in der vorher beschriebenen Weise ausgebildet sind, parallel nebeneinander angeordnet sind und jeweils von parallelen Luftströmungen durchströmt sind, welche durch die Rohrleitungen 43 strömen.

Der gesamte Innenraum des jeweiligen Wärmetauschermoduls 41 ist mit dem PCM-Material 2 gefüllt und gleichfalls wird das PCM-Material noch im Innenraum durch eine Vielzahl von dort entlang geführten wassergefüllten Rohrleitungen 42 gekühlt, sodass damit ein hochwirksamer Wärmeaustausch zwischen dem in den Rohrleitungen 42 strömenden flüssigen Kühlmedium und der durch die großdimensionierten Luftleitungen 43 strömenden Kühlluft 33 erfolgt.

Es ist selbstverständlich möglich, die Wärmeübergänge in den jeweiligen Wärmetauschermodulen 41 noch dadurch zu verbessern, dass die wasserführenden Rohrleitungen 42 stark verrippt sind und demzufolge in das halbflüssige oder erstarrte PCM-Material hinein verzweigt sind und ebenso ist es möglich, dass auch die luftführenden Luftleitungen 43 stark verrippt sind und mit entsprechenden Konvektorblechen umgeben sind. Solche lamellenartigen Verrippungen sind zwar bei Luft-Wasserwärmetauschern für die Verwendung in Kraftfahrzeugen als Kühlwasser-Kühler bekannt. Die Anwendung solcher Wärmetauscher bei Einbettung in das PCM-Material hat aber den bisher noch nicht bekannten Effekt, dass lediglich dünnen Schichten des PCM-Materials durch die Einbettung zwischen den Lamellenbleche des Wärmetauschers gebildet werden und daher ein besonders günstiger Wärmeübergang ermöglicht wird.

Die Figur 6 zeigt im Übrigen, dass die beiden Schalen 29, 30 durch zugeordnete Verbindungselemente 40 zusammengehalten sind.

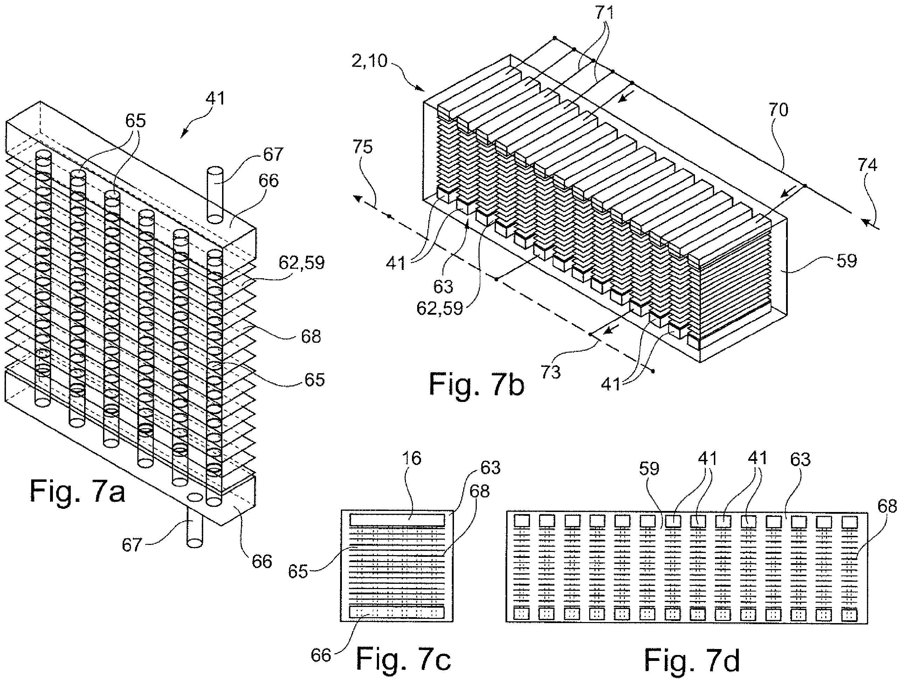

Die Figur 7 zeigt nochmals den Aufbau der nebeneinander angeordneten parallel geschalteten Wärmetauschermodulen 41 in Alleinstellung.

Aus den Figuren 7a bis 7d sind weitere Einzelheiten eines Wärmetauschermoduls 41 entnehmbar. Es handelt sich um einen Wasser-Wärmetauscher, der mit dem im Innenraum angeordneten Material 62 den Wärmeverbund eingeht.

Am oberen Verteilerkasten 66 ist ein Stutzen 67 für den Einlauf von Wasser angeordnet, welches gleichmäßig über den Verteilerkasten 66 verteilt in die verschiedenen, parallel dort anschließenden Verbindungsrohre 65 einströmt.

Alle Verbindungsrohre 65 sind mit zugeordneten Konvektorblechen 68 verbunden, und im Zwischenraum zwischen den Konvektorblechen 68 ist das fettartige Material 62 des PCM-Speichers 2, 10 gleichmäßig verteilt und wärmeübertragend angeordnet.

Alle Verbindungsrohre 65 münden in den auslaufseitigen Verteilerkasten 66, wo das Wasser wieder den unteren Stutzen 67 verlässt.

Die Figur 7b zeigt, dass eine Vielzahl derartiger Wärmetauschermodule 41 insgesamt nunmehr den Pufferspeicher 10 bilden, in dessen Gehäuse 63 nunmehr das PCM-Material 62 eingefüllt ist und vollkommen formschlüssig und spaltfüllend alle Konvektorbleche 68 und alle dort angeordneten Wärmetauschermodule 41 und die dazugehörenden Verbindungsrohre 65 umschließt.

Auf diese Weise wird eine gleichmäßige Verteilung der Wärme oder der Wärmeabgabe auf alle Wärmetauschermodule 41 gewährleistet.

Als Beispiel ist in Figur 7b dargestellt, dass eine gemeinsame Sammelleitung 70 in Pfeilrichtung 74 mit einem Wasserstrom versorgt wird, der in Parallelschaltung auf sämtliche Wärmetauschermodule 41 einfließt.

Diese werden von dem Wasser durchflossen und fließen nach unten aus den unteren Verteilerkästen 66 wieder über eine unten angeordnete Sammelleitung 73 heraus. Das Wasser verlässt dann in Pfeilrichtung 75 den Pufferspeicher 10 und kann dann entweder in die Rohrleitung 3 der Klimadecke 28 eingeleitet werden oder in einen externen Luft-Wasserwärmetauscher, der außerhalb des Gebäudes angeordnet ist.

Die Einlaufseite und die Auslaufseite des Pufferspeichers 10 können so gemäß Figur 5 an die Rohrleitungen 3 der Klimadecke 28 angeschlossen sein.

Die Figuren 7c und 7d zeigen jeweils die Stirnansicht und die Draufsicht auf den Pufferspeicher 10, wo unter anderem auch entnehmbar ist, dass der Innenraum 59 vollständig mit dem Wärme führenden PCM-Material 62 gefüllt ist.

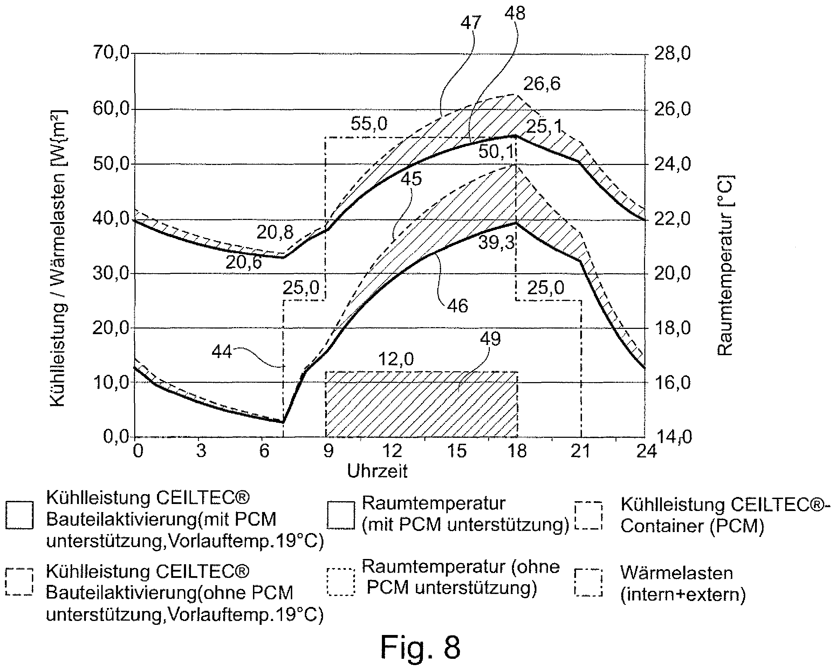

Die Figur 8 zeigt nun die vorteilhaften Wirkungen bei der Verwendung eines Latentwärmespeichers in der Form eines Kühlpuffers, wobei auf der Ordinate die Kühlleistungen/ Wärmelasten in Watt pro Quadratmeter aufgeführt sind und gleichzeitig auch die Raumtemperatur in Grad Celsius, während auf der Abszisse die Uhrzeit angegeben ist.

Um Mitternacht ist die Wärmelast entsprechend der Wärmelastkurve 44 minimal und steigt erst um etwa 07:00 Uhr an, wobei dann eine Last von 25,0 Watt pro Quadratmeter erreicht wird.

Die beiden gestrichelten Kurven zeigen jeweils die Wärmelast ohne Verwendung eines Pufferspeichers.

Die gestrichelte obere Kurve ist die Raumtemperaturkurve 47 ohne Verwendung eines Latentwärmespeichers, während die darunterliegende Raumtemperaturkurve 48 die Kurve ist, die sich bei Verwendung eines Latentwärmespeichers zur weiteren Kühlung ergibt.

Die darunterliegende gestrichelte Kurve ist die Kühlleistung der Klimadecke 28 für das thermisch aktivierbare Betonelement 1 ohne Verwendung eines Pufferspeichers und die darunterliegende Kurve ist die Kühlleistung 46 mit Verwendung des Pufferspeichers.

Die Figur 8 zeigt ferner einen weiterer Anstieg der Wärmelasten von beispielsweise 25,0 Watt pro Quadratmeter auf 55,0 Watt pro Quadratmeter wobei nunmehr der Pufferspeicher zur Uhrzeit 09:00 Uhr eingeschaltet wird und der Ventilator wirksam ist, um so über einen konstanten Bereich der Kühlleistung 49 in dem angegebenen Bereich eine Erniedrigung der Raumtemperatur von der Kurve 47 auf die Kurve 48 zu erreichen und auch die Kühlleistung 45 der Klimadecke auf die niedrigere Kühlleistung 46 zu verringern.

Der Latentwärmespeicher 2, 10 mit seiner Kühlleistung 49 senkt also auch den Energiebedarf der Klimadecke 28 wesentlich ab und führt zu einer schnelleren Regelung der Raumtemperatur und des Raumklimas.

Erst wenn die Wärmelasten um 18:00 Uhr wieder abfallen, wird der Latentwärmespeicher ausgeschaltet und die Kurven nehmen ihren Verlauf, wie in Figur 8 auf der rechten Seite gezeichnet ist.

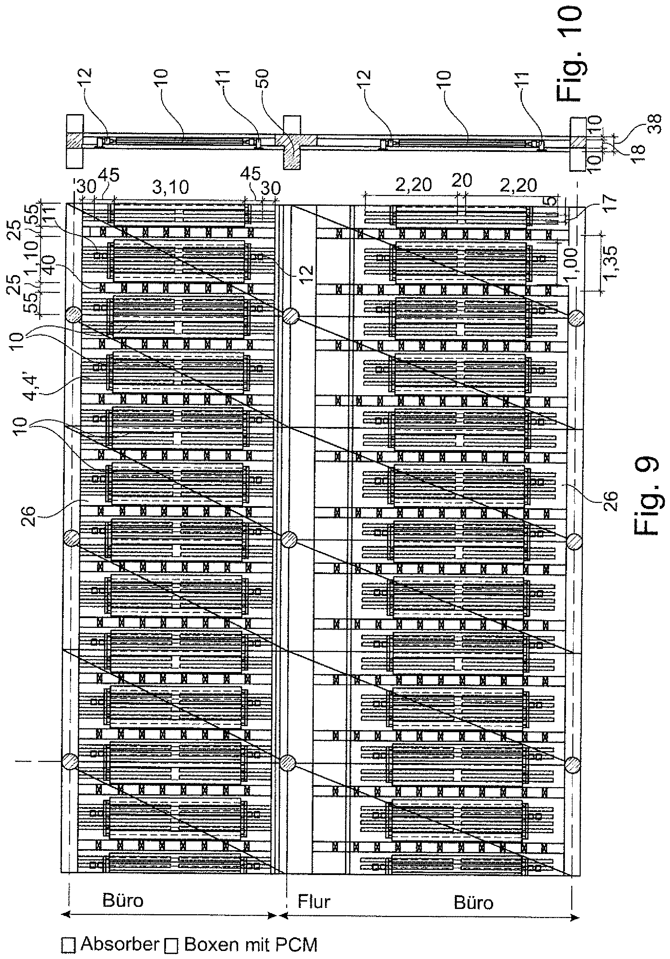

Die Figuren 9 zeigt einen Schnitt durch eine doppelschalige Raumdecke und die Figur 10 eine Draufsicht auf einen klimatisierten Raum 26, wo erkennbar ist, dass eine Vielzahl von Pufferspeichern 10 parallel nebeneinanderliegend angeordnet sind und über getrennte oder gemeinsame Lufteinblasungen 54 in den Raum 26 einblasen und gegebenenfalls die Einblasöffnungen im Zwischenraum einer nicht dargestellten Unterzugsdecke angeordnet sind.

Ansonsten sind noch die Anschlüsse für das Wasser dargestellt und auch die vorher erwähnten Verbindungselemente 40 und es ist schematisiert dargestellt, dass gegebenenfalls auch eine Raum-Trennwand 50 vorhanden sein kann.

### Zeichnungslegende

1. klimatisiertes Betonelement
2. PCM-Element
3. Rohrleitung
4. Pfeilrichtung, 4'
5. Wasser
6. Kühldecke
7. Pfeilrichtung
8. gekühlte Luft
9. Pfeilrichtung
10. Pufferspeicher
11. Luftzuführung
12. Luftabführung
13. Position
14. -"-
15. -"-
16. Wärmespeicher PCM
17. Wärmespeicher Beton
18. Pistion
19. -"-
20. -"-
21. -"-
22. Temperaturkurve PCM
23. Linie T1
24. -"- T2
25. Temperaturkurve Beton
26. Taum
27. Fenster
28. Klimadecke
29. Oberschale
30. Unterschale
31. Hohlraum
32. Raumluft
33. Kühlluft
34. Wasserzulauf
35. Beipass
36. Luftleitung Außenluft
37. -"-
38. Ventilator
39. Sonneneinstrahlung
40. Verbindungselement
41. Wärmetauschermodul
42. Rohrleitung
43. Luftleitung
44. Wärmelastkurve
45. Kühlleistung ohne Pufferspeicher
46. Kühlleistung mit Pufferspeicher
47. Raumtemperatur ohne Puffer
48. Raumtemperatur mit Puffer
49. Kühlleistung Puffer
50. Trennwand
51. Phasenübergang
52. Wärmelast (Personen)
53. Wärmelast (Sonne)
54. Lufteinblasung
55. Luftansaugung
56.
57.
58.
59. Innenraum
60.
61.
62. PCM-Material
63. Gehäuse
64.
65. Verbindungsrohr
66. Verteilerkasten
67. Stutzen
68. Konvektorblech
69.
70. Sammelleitung
71.
72. Abzweige
73. Sammelleitung
74. Pfeilrichtung
75. Peilrichtung
76.

## Patentansprüche

1. Verfahren zur Klimatisierung von Räumen (26) über eine Klimadecke (28), welche aus thermisch aktivierten Betonelementen ausgebildet ist, wobei parallel zur Klimadecke (28) ein Pufferspeicher (10) angeordnet ist, der als Latentwärmespeicher (2, 41) ausgebildet ist, **dadurch gekennzeichnet, dass** der Latentwärmespeicher (2, 41) als blockförmiges oder zylinderförmiges Gehäuse ausgebildet ist, welches in seinem Innenraum eine Anzahl von Wärmetauschermodulen (41) enthält, wobei jedes Wärmetauschermodul (41) aus einander gegenüberliegenden einlauf- und auslaufseitigen Verteilerkästen (66) besteht, die über eine Vielzahl von Verbindungsrohren (65) miteinander verbunden sind, die wärmeleitend mit Konvektorblechen (68) verbunden sind und dass über die einlauf- und auslaufseitigen angeordneten Verteilerkästen ein Wärmeträgermedium hindurchströmt, dass das im Zwischenraum zwischen den Konvektorblechen (68) und den Verbindungsrohren (65) angeordnete PCM-Material (62) des Latentwärmespeichers (2, 41) kühlt oder erwärmt.

2. Verfahren nach Anspruch 1, **dadurch gekennzeichnet, dass** der Pufferspeicher (10) als zusätzliche Klimatisierung für den zu klimatisierenden Raum (26) die Abluft aus dem Raum (26) abzieht, in geeigneter Weise abkühlt oder aufheizt und als temperierten Luftstrom (33) in den Raum (26) einleitet

3. Verfahren nach Anspruch 1 oder 2, **dadurch gekennzeichnet, dass** die im Pufferspeicher (10) angeordneten Wärmetauschermodule (41) von dem Kühl- oder Heizmittelstrom der Klimadecke (28) durchströmt sind.

4. Verfahren nach Anspruch 1 oder 2, **dadurch gekennzeichnet, dass** die im Pufferspeicher (10) angeordneten Wärmetauschermodule (41) von einem vom Kühl- oder Heizmittelstrom der Klimadecke (28) getrennten Kühl- oder Heizmittelstrom durchströmt sind.

5. Verfahren nach einem der Ansprüche 1 bis 4, **dadurch gekennzeichnet, dass** das Gehäuse (63) des Pufferspeichers (10) in wärmeleitenden Kontakt mit der Klimadecke (28) ist.

6. Verfahren nach einem der Ansprüche 1 bis 5, **dadurch gekennzeichnet, dass** der Pufferspeicher (10) ein fettartiges und schmelzbares PCM-Material (2) aufweist, welches einen direkt ansprechbaren und kontrollierbaren Energiespeicher bildet, der über das Wärmeträgermedium Wasser be- und entladbar ist und dass das raumseitige Medium Luft (32, 33) seine Energie über einen weiteren Wärmetauscher mit dem Wärmeträgermedium Wasser austauscht.

7. Vorrichtung zur Klimatisierung von Räumen (26) über eine Klimadecke (28) welche aus thermisch aktivierten Betonelementen ausgebildet ist, wobei parallel zur Klimadecke (28) ein Pufferspeicher (10) angeordnet ist, der als Latentwärmespeicher (2, 41) ausgebildet ist, **dadurch gekennzeichnet, dass** der Latentwärmespeicher (2, 41) als blockförmiges oder zylinderförmiges Gehäuse ausgebildet ist, welches in seinem Innenraum eine Anzahl von Wärmetauschermodulen (41) enthält, wobei jedes Wärmetauschermodul (41) aus einander gegenüberliegenden einlauf- und auslaufseitigen Verteilerkästen (66) besteht, die über eine Vielzahl von Verbindungsrohren (65) miteinander verbunden sind, die wärmeleitend mit Konvektorblechen (68) verbunden sind und dass im Zwischenraum zwischen den Konvektorblechen (68) und den Verbindungsrohren (65) das PCM-Material (62) des Latentwärmespeichers (2, 41) angeordnet ist.

8. Vorrichtung nach Anspruch 7, **dadurch gekennzeichnet, dass** der Pufferspeicher (10) als PCM-Material (62) bevorzugt eine fettartige, schmelzbare Masse, bevorzugt Speisefett oder Paraffin, aufweist.

9. Vorrichtung nach Anspruch 8, **dadurch gekennzeichnet, dass** das fettartige, schmelzbare Material (2, 62) wärmeleitend und spaltfüllend die Zwischenräume zwischen den Konvektorblechen (68) von wasserdurchflossenen Wärmetauschermodulen (41) ausfüllt.

10. Vorrichtung nach Anspruch 8 oder 9, **dadurch gekennzeichnet, dass** die Vielzahl von wasserdurchströmten Wärmetauschermodule (41) die im Innenraum des Gehäuses (63) des Pufferspeichers (10) angeordnet sind, annähernd vollständig in das fettartige, schmelzbare Material (2) eingebettet sind.

## Claims

1. Method for air-conditioning rooms (26) via an air-conditioning ceiling (28) which is formed from thermally activated concrete elements, wherein parallel to the air-conditioning ceiling (28) is arranged a buffer store (10) which is designed as a latent heat store (2, 41), **characterised in that** the latent heat store (2, 41) is designed as a block-like or cylinder-like housing containing a number of heat-exchanger modules (41) in its interior, wherein each heat-exchanger module (41) consists of inflow-side and outflow-side distribution boxes (66) opposite one another and connected to one another via a plurality of connecting tubes (65) connected to convector plates (68) to conduct heat and **in that** a heat-carrier medium flows through via the distribution boxes arranged on the inflow-side and outflow-side, **in that** the PCM material (62) of the latent heat store (2, 41) arranged in the space between the convector plates (68) and the connecting tubes (65) cools or heats.

2. Method according to claim 1, **characterised in that** the buffer store (10) as additional air-conditioning for the room (26) to be air-conditioned withdraws the waste air from the room (26), cools it down or heats it up in suitable manner and introduces it into the room (26) as a tempered air stream (33).

3. Method according to claim 1 or 2, **characterised in that** the cooling medium stream or heating medium stream of the air-conditioning ceiling (28) flows through the heat-exchanger modules (41) arranged in the buffer store (10).

4. Method according to claim 1 or 2, **characterised in that** a cooling medium stream or heating medium stream separated from the cooling medium stream or heating medium stream of the air-conditioning ceiling (28) flows through the heat-exchanger modules (41) arranged in the buffer store (10).

5. Method according to one of claims 1 to 4, **characterised in that** the housing (63) of the buffer store (10) is in heat-conducting contact with the air-conditioning ceiling (28).

6. Method according to one of claims 1 to 5, **characterised in that** the buffer store (10) has a fat-like and meltable PCM material (2) which forms a directly respondable and controllable energy store which can be water charged and discharged via the heat-carrier medium and **in that** the room-side medium air (32, 33) exchanges its energy with the heat-carrier medium water via a further heat exchanger.

7. Device for air-conditioning rooms (26) via an air-conditioning ceiling (28) which is formed from thermally activated concrete elements, wherein parallel to the air-conditioning ceiling (28) is arranged a buffer store (10) which is designed as a latent heat store (2, 41), **characterised in that** the latent heat store (2, 41) is designed as a block-like or cylinder-like housing containing a number of heat-exchanger modules (41) in its interior, wherein each heat-exchanger module (41) consists of inflow-side and outflow-side distribution boxes (66) opposite one another and connected to one another via a plurality of connecting tubes (65) connected to convector plates (68) to conduct heat and **in that** the PCM material (62) of the latent heat store (2, 41) is arranged in the space between the convector plates (68) and the connecting tubes (65).

8. Device according to claim 7, **characterised in that** the buffer store (10) has as PCM material (62), preferably a fat-like, meltable composition, preferably edible fat or paraffin.

9. Device according to claim 8, **characterised in that** the fat-like, meltable material (2, 62) fills the spaces between the convector plates (68) of heat-exchanger modules (41) with water flowing through to conduct heat and fill a gap.

10. Device according to claim 8 or 9, **characterised in that** the plurality of heat-exchanger modules (41) with water flowing through, which are arranged in the interior of the housing (63) of the buffer store (10), are embedded almost completely in the fat-like, meltable material (2).

## Revendications

1. Procédé de climatisation d'espaces (26) par l'intermédiaire d'un plafond de climatisation (28) qui est formé d'éléments en béton activés thermiquement, dans lequel est disposé parallèlement au plafond de climatisation (28) un accumulateur tampon (10) qui est formé en tant qu'accumulateur de chaleur latente (2, 41), **caractérisé en ce que** l'accumulateur de chaleur latente (2, 41) est formé en tant que boîtier en forme de bloc ou de cylindre qui contient dans son espace intérieur nombre de modules échangeurs de chaleur (41), dans lequel chaque module échangeur de chaleur (41) se compose de caissons distributeurs (66) mutuellement opposés côté entrée et côté sortie qui sont reliés les uns aux autres par l'intermédiaire d'une pluralité de tubes de liaison (65) qui sont reliés avec conduction de chaleur à des tôles de convecteur (68), et que par l'intermédiaire des caissons distributeurs (66) disposés côté entrée et côté sortie traverse un médium caloporteur, que le matériau PCM (62) de l'accumulateur de chaleur latente (2, 41) disposé dans l'espace intermédiaire entre les tôles de convecteur (68) et les tubes de liaison (65) refroidit ou chauffe.

2. Procédé selon la revendication 1, **caractérisé en ce que** l'accumulateur tampon (10), en tant que climatisation supplémentaire pour l'espace à climatiser (26), extrait l'air sortant de l'espace (26), le refroidit ou le réchauffe d'une manière appropriée et l'introduit dans l'espace (26) en tant que courant d'air tempéré (33).

3. Procédé selon la revendication 1 ou 2, **caractérisé en ce que** les modules échangeurs de chaleur (41) disposés dans l'accumulateur tampon (10) sont traversés par le courant de médium refroidisseur ou chauffant du plafond de climatisation (28).

4. Procédé selon la revendication 1 ou 2, **caractérisé en ce que** les modules échangeurs de chaleur (41) disposés dans l'accumulateur tampon (10) sont traversés par un courant de médium refroidisseur ou chauffant séparé du courant de médium refroidisseur ou chauffant du plafond de climatisation (28).

5. Procédé selon l'une des revendications 1 à 4, **caractérisé en ce que** le boîtier (63) de l'accumulateur tampon (10) est en contact conducteur de chaleur avec le plafond de climatisation (28).

6. Procédé selon l'une des revendications 1 à 5, **caractérisé en ce que** l'accumulateur tampon (10) présente un matériau PCM (2) graisseux et fusible, lequel forme un accumulateur d'énergie apte à réagir et être contrôlé directement qui est apte à être chargé ou déchargé par le médium caloporteur eau, et que le médium air côté espace (32, 33) échange son énergie par l'intermédiaire d'un autre échangeur de chaleur avec le médium caloporteur eau.

7. Dispositif de climatisation d'espaces (26) par l'intermédiaire d'un plafond de climatisation (28) qui est formé d'éléments en béton activés thermiquement, dans lequel est disposé parallèlement au plafond de climatisation (28) un accumulateur tampon (10) qui est formé en tant qu'accumulateur de chaleur latente (2, 41), **caractérisé en ce que** l'accumulateur de chaleur latente (2, 41) est formé en tant que boîtier en forme de bloc ou de cylindre qui contient dans son espace intérieur nombre de modules échangeurs de chaleur (41), dans lequel chaque module échangeur de chaleur (41) se compose de caissons distributeurs (66) mutuellement opposés côté entrée et côté sortie qui sont reliés entre eux par une multiplicité de tubes de liaison (65) qui sont reliés avec conduction de chaleur à des tôles de convecteur (68), et que dans l'espace intermédiaire entre les tôles de convecteur (68) et les tubes de liaison (65) est disposé le matériau PCM (62) de l'accumulateur de chaleur latente (2, 41).

8. Dispositif selon la revendication 7, **caractérisé en ce que** l'accumulateur tampon (10) présente de préférence en tant que matériau PCM (62) une masse graisseuse, fusible, de préférence de la graisse alimentaire ou de la paraffine.

9. Dispositif selon la revendication 8, **caractérisé en ce que** le matériau graisseux, fusible (2, 62) remplit avec conduction de chaleur et remplissage d'interstices les espaces intermédiaires entre les tôles de convecteur (68) de modules échangeurs de chaleur (41) traversés par l'eau.

10. Dispositif selon la revendication 8 ou 9, **caractérisé en ce que** la pluralité de modules échangeurs de chaleur (41) traversés par un courant d'eau qui est disposée dans l'espace intérieur du boîtier (63) de l'accumulateur tampon (10) est presque entièrement enrobée dans le matériau graisseux fusible (2).
